# EUROPEAN PATENT SPECIFICATION

(11) **EP 3 303 008 B1**
(45) Date of publication and mention of the grant of the patent: **18.12.2019**
(21) Application number: 16735932.2
(22) Date of filing: 16.05.2016
(51) Int. Cl.: B60C 11/03, B60C 11/12, B60C 5/18

(54) **A TYRE FOR VEHICLE WHEELS**
REIFEN FÜR FAHRZEUGRÄDER
PNEUMATIQUE DESTINÉ À DES ROUES DE VÉHICULE

(30) Priority: 27.05.2015 IT UB20150946
(43) Date of publication of application: 11.04.2018
(60) Divisional application: 19207503.4
(73) Proprietor: Pirelli Tyre S.p.A., 20126 Milano (IT)
(72) Inventor: BELLO, Vito, I-20126 Milano (IT); MONTESELLO, Stefano, I-20126 Milano (IT); SPEZIARI, Diego Ettore, I-20126 Milano (IT)
(74) Representative: Susanetto, Carlo
(86) International application number: PCT/IB2016/052827
(87) International publication number: WO 2016/189418

(56) References cited:
- EP-A1- 2 463 123
- DE-A1-102010 060 946
- DE-A1-102011 055 916
- JP-A- 2013 023 191
- US-A1- 2006 151 078

## Description

The present invention relates to a tyre for vehicle wheels which is provided with a tread pattern which is particularly configured to optimize the performances of the tyre under different conditions of a road surface.

A tyre generally comprises a carcass structure which is torically formed about an axis of rotation and which includes at least one carcass web which has end edges which engage in annular securing structures, known as bead cores, respectively.

In a radially external position with respect to the carcass structure, there is provided a belt structure comprising, in the case of car tyres, at least two radially superimposed strips of rubber fabric provided with reinforcement cords, usually of metal, which are arranged parallel with each other in each strip but crossed with respect to the cords of the adjacent strip, preferably symmetrically with respect to the equatorial plane of the tyre.

Preferably, the belt structure further also comprises in a radially external position, at least at the ends of the belt strips below, a third layer of textile or metal cords which are arranged circumferentially (at 0 degrees). In tyres of the tubeless type there is further provided a radially internal layer which is referred to as a liner and which has impermeability characteristics in order to ensure the airtightness for the tyre itself.

In a radially external position with respect to the belt structure, there is applied a tread band which is produced from elastomer material and on which there is defined a tread pattern which is intended for contact with the road surface.

Tyres, in order also to ensure adequate grip on wet road surfaces, have a tread band which is provided with grooves which have different shapes and geometries and the main function of which is to allow the discharge of the water present between the surface of the tyre and the road surface during mutual contact, preventing the hydrostatic pressure resulting from the impact of the water against the tyre travelling forwards from being able to cause lifting, or partial lifting, of the tyre from the road surface and consequent loss of control of the vehicle (a phenomenon known as "aquaplaning").

However, the presence of grooves in the tread band, although on the one hand it allows the discharge of water, on the other hand necessarily reduces the contact surface of the tyre with the road surface, limited only to the blocks which are defined by the grooves, consequently reducing the gripping capacity thereof when it is subjected to braking, acceleration or when driven round bends.

The situation is further complicated when the tyre is of the winter type. In fact, winter tyres have a tread band in the blocks of which there are formed a plurality of sipes, also known as "notches", which extend inside the individual blocks in a radial reference plane.

The function of the sipes, the presence of which is one of the most evident features which distinguish a winter tyre from conventional summer tyres, is to provide additional gripping elements with respect to the snow-covered ground and to retain therein some quantity of snow, thereby improving the friction with the snow-covered ground.

However, the presence of the sipes on the blocks of the tread band consistently reduces the performances of the tyre when the road surface is not covered with snow, being dry or wet, as a result of the greater deformability of the blocks in the presence of tangential forces (or "shear stress") which are imparted to the tread band during acceleration, bending or braking.

A tyre which is suitable for travel under all the above-mentioned conditions of a road surface (dry, wet and snowy) is therefore claimed to balance the opposing configuration requirements so that the provision of grooves in the tread band is optimized in accordance with the demanded requirements for use.

Exemplary tyres according to the prior art are disclosed in US 2006/151078, DE 102011055916, DE 102010060946, EP 2463123 and JP 2013023191.

The Applicant felt the need to provide a tread pattern which is capable of providing for winter tyres excellent performance levels both in the case of travel on snow-covered surfaces and in the case of travel on dry and/or wet surfaces, maintaining a good performance level in terms of wear of the tread itself.

The Applicant has further felt the need to provide a tyre which is provided with a tread pattern which allows a better balance to be obtained between the opposing requirements set out above, using a number, geometry and configuration of grooves and sipes.

The Applicant has found that a tyre whose tread pattern comprises a plurality of main grooves which are arranged so that each radial plane intersects with at least four main grooves at the central region and further comprises at least one plurality of secondary grooves which extend in a substantially circumferential direction between successive pairs of main grooves and which are arranged in a region which extends across the central region and a shoulder region of the tread band, has both a good capacity for discharging water and a good adhesion to the wet road surface, providing an optimum balance of the performance levels on different types of road surface.

In particular, in a first aspect thereof, the invention relates to a tyre for vehicle wheels according to claim 1.

The Applicant has established that, with this configuration of main and secondary grooves, the tread band has optimum performance levels both in terms of discharge of the water and in terms of the grip, both on a wet surface and on a dry surface.

The term "effective width" with reference to the tread band is intended to be understood to be the width of the radially outermost portion of the tread band, from side to side, which is intended for contact with the ground.

The term "groove" is intended to be understood to refer to a recess which is formed in a portion of the tread band and which has a width which is greater than or equal to 1 millimetre and preferably a depth greater than 3 millimetres.

The term "sipe" is intended to be understood to be a recess which is formed in a tread band portion and which has a width less than 1 millimetre.

The term "equatorial plane" of the tyre is intended to be understood to be a plane which is perpendicular to the rotation axis of the tyre and which subdivides the tyre into two symmetrically equal portions.

The term "inclination" of a tread element is intended to refer to the modulus of the acute angle (between 0° and 90°) formed by the element with respect to a direction parallel with the equatorial plane of the tyre.

The term "circumferential" direction is intended to refer to a direction which is generally directed in accordance with the rotation direction of the tyre, or at any rate slightly inclined with respect to the rotation direction of the tyre.

Another parameter which is used in the technical field being referred to for a quantitative evaluation of the presence of grooves in the tread pattern is the "void-to-rubber ratio", a dimensionless number which is defined as being the ratio between the total surface-area of the grooves contained in a specific portion of the tread pattern (where applicable, the whole of the tread) and the total surface-area of the specific portion of the tread pattern (where applicable, the whole of the tread pattern).

Preferably, said number of main grooves which are intersected by said any radial plane is between four and six.

The Applicant has established that for the tyres having normal dimensions a suitable balance between the requirements involving draining water, grip on the road surface and wear is obtained by making provision, for each contact face between the tread band and the road surface, for there to be from four to six main grooves ready to direct the water present in the central region of the tread band. In fact, a number less than four would reduce the drainage capacity of the water with a potential risk of aquaplaning, while a number greater than six could bring about an excessive reduction of the dimensions of the blocks which are defined on the tread band.

The Applicant has noted that bocks having a greatly reduced dimension may be deformable, which may bring about a substantial reduction of the performance levels on the road, particularly in terms of grip and wear and actually a partial occlusion of the adjacent grooves towards which they could be bent.

According to a preferred feature, said number of main grooves which are intersected by said any radial plane is equal to four or five.

Preferably, an initial end of each of said main grooves, which end is identified in said central region, is in substantial axial alignment with the transition of another main groove from said central region towards said first or second shoulder region.

As a result of this feature, the capacity for discharge of water remains substantially homogeneous over the entire circumferential extension of the tread band, improving the homogeneity of the behaviour of the tyre on the road.

In an embodiment of the invention, each main groove comprises a first length which extends substantially from said equatorial plane through said central region and a second length which is connected to said first length and which extends through said first shoulder region or said second shoulder region towards said lateral edge of the tread band.

Preferably, said first length has a first inclination with respect to the equatorial plane of the tyre and said second length has a second inclination with respect to said equatorial plane, greater than said first inclination.

According to a preferred feature, said first inclination is between 10° and 40°.

In this manner, the speed of discharge of the water in the central region is particularly promoted.

According to another feature, said second inclination is between 65° and 85°.

Preferably, the width of said main grooves increases from an initial end, which is identified in said central region, towards said lateral edge of the tread band.

In a further preferred manner, the ratio between the width of said main grooves at said lateral edge of the tread band and said initial end is between 3 and 4.5.

As a result of this feature, the quantity of water collected inside the main groove and caused to flow down towards the lateral edge of the tread band may suitably increase along the extension of the groove, preventing the water already present in the groove from constituting a substantial impediment to the access of new water.

Preferably, said tread band comprises a first plurality of secondary grooves which extend in a region defined across said central region and said first shoulder region at a distance from said equatorial plane between about 25% and about 35% of said effective width of the tread band.

Preferably, said tread band comprises a second plurality of secondary grooves which extend in a region which is defined across said central region and said second shoulder region at a distance from said equatorial plane between about 25% and about 35% of said effective width of the tread band.

In a greatly preferred manner, said first plurality of secondary grooves or said second plurality of secondary grooves extend at a distance from said equatorial plane equal to about 30% of said effective width of the tread band.

Preferably, said first plurality of secondary grooves and said second plurality of secondary grooves are substantially symmetrical with respect to said equatorial plane.

According to a preferred feature, each of said secondary grooves has an inclination with respect to a direction parallel with the equatorial plane between 0° and 10°.

As a result of this feature, the secondary grooves maintain a high capacity of drainage of the water, thereby providing additional edges for improving the grip of the tyre in the event of axial stress.

According to another preferred feature, each secondary groove has both ends at least partially facing, in a circumferential direction, an end of another secondary groove.

In this manner, there is maintained between the secondary grooves a continuous passage in the circumferential direction which promotes a more rapid discharge of water.

According to a preferred feature, at said central region, a connection groove extends between pairs of main grooves.

In a greatly preferred manner, each connection groove has an inclination with respect to the equatorial plane of the tyre between 10° and 30°.

Preferably, said secondary grooves have a width between 2 mm and 5 mm.

According to a preferred feature, said connection grooves have a width between 1 mm and 3 mm.

Preferably, said tread band, inside the effective width thereof, has a void-to-rubber ratio between 0.30 and 0.36.

Preferably, the void-to-rubber ratio of the central region is between 0.28 and 0.36.

Preferably, the void-to-rubber ratio of the shoulder region is between 0.31 and 0.38.

In a preferred version, said main grooves and said secondary grooves define at said tread band a plurality of blocks, on each of which there are formed a plurality of sipes which are capable of promoting the grip of said tyre on a snow-covered surface.

The features and advantages of the invention will be better appreciated from the detailed description of a preferred embodiment thereof, which is illustrated by way of non-limiting example with reference to the appended drawings, in which:
- Figure 1 is a perspective view of a tyre for vehicle wheels which is produced according to the present invention;
- Figure 2 is a schematic view of the development in a plane of a significant region of the tread band of the tyre of Figure 1.

With reference to the appended Figures, there is generally designated 1 a tyre for vehicle wheels which is produced according to the present invention.

The tyre 1 has a conventional form which is generally toric and which is developed about a rotation axis which defines an axial direction Y of the tyre, and through which an equatorial plane X, which is perpendicular to the axis, extends.

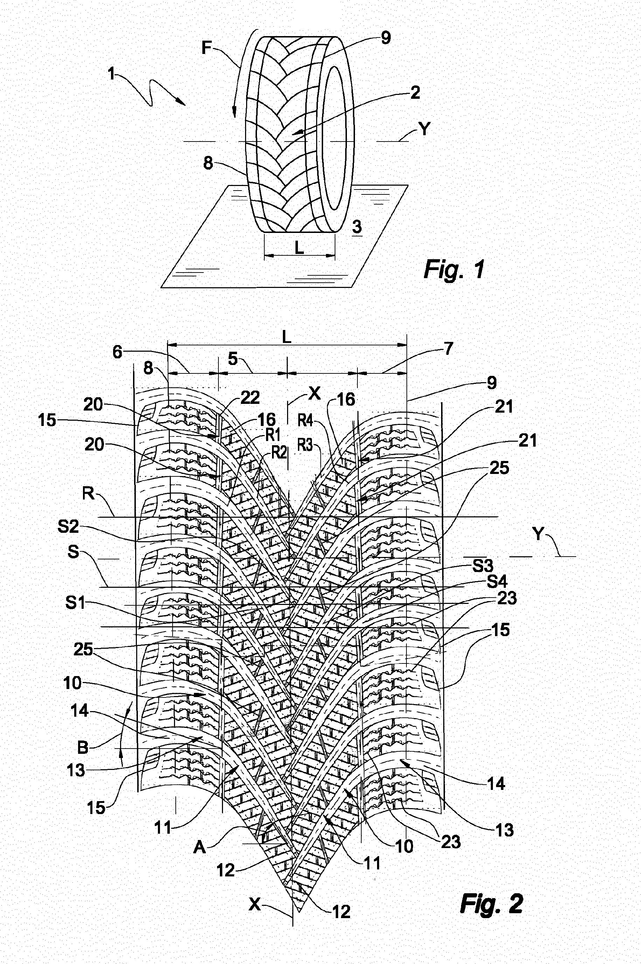

The tyre 1 is a tyre which is provided for winter use and comprises a tyre structure which is conventional per se and which is not illustrated in the appended Figures, as well as a tread band 2 which is arranged in a radially external position with respect to the tyre 1 and which is intended for contact with a road surface 3, which is schematically illustrated in Figure 1.

The tyre 1 preferably has a nominal section width between about 155 mm and about 235 mm. Preferably, said nominal section width is less than or equal to about 215 mm. The tyre 1 preferably has a rim diameter between 14 and 17 inches.

There is defined on the tread band 2 an effective width L which is defined as being the maximum width of the tread band which is intended for contact with the ground under standard conditions of use.

There remain defined on the tread band 2 a central region 5 which extends circumferentially and symmetrically about the equatorial plane X over a total width which is equal to about 60% of the effective width L, as well as a first shoulder region 6 and a second shoulder region 7, which extend at the axially opposing sides of the central region 5, respectively, in an axially external position with respect to the tread band 2.

The first and the second shoulder regions 6 and 7 extend symmetrically over a distance equal to about 20% of the effective width L and are delimited at the side opposite the equatorial plane X by respective lateral edges of the tread band 2 which are designated 8 and 9, respectively.

With reference to Figure 2, it may be noted that, by referring that pattern to a development in a plane of a generally curved surface, the lateral edges 8 and 9 of the tread band 2 are more internal with respect to the side edges as illustrated in the drawing, which in the real configuration of the tread band, are curved towards the sidewall of the tyre.

In Figure 2, the three above-defined regions are delimited by broken lines.

There are formed on the tread band 2 a plurality of grooves which, together with the blocks delimited thereby, generally form the tread pattern of the tyre 1.

The particular configuration of the tread pattern of the tyre 1, according to the present invention, makes it of the directional type, in the sense that the assembly of the tyre has to ensure, during normal travel of the vehicle, the rotation thereof in a predetermined direction, designated F in Figure 1.

The tread band 2 comprises a plurality of main grooves 10 which are arranged in succession over the circumferential extension of the tread band.

Preferably, each main groove extends substantially continuously from the central region 5, through a shoulder region 6 or 7 in order to open at a respective lateral edge 8 or 9 of the tread band 2.

The main grooves 10 which extend through the first shoulder region 6 and the main grooves 10 which extend through the second shoulder region 7 are arranged in alternating succession with respect to the equatorial plane of the tyre, over the circumferential extension of the tread band 2.

Each main groove 10 comprises a first length 11 which extends from an initial end 12 through the central region 5 and a second length 13 which is connected to the first length 11 and which extends through the first or second shoulder region 6 or 7 towards the respective lateral edge 8 or 9 of the tread band 2, in which an open terminal end 14 is defined.

Preferably, the first length 11 has a first inclination A with respect to the equatorial plane X greater than or equal to 10°.

Preferably, said first inclination A with respect to the equatorial plane X is less than or equal to 40°.

Preferably, said first inclination A of said first length 11 is about 30°.

Preferably, the second length 13 has a second inclination B with respect to the equatorial plane X greater than said first inclination A.

Preferably, said second inclination B is greater than or equal to 65°.

Preferably, said second inclination B of said second length 13 is less than or equal to 85°.

Preferably, said second inclination B is about 75°.

The initial end 12 of each main groove 10 is positioned substantially at the equatorial plane X and extends towards the adjacent main groove. In the region of the initial end 12, therefore, the main groove may have a ramp-like profile which brings the bottom of the groove nearly to the level of the tread band so that, in fact, the main groove is separated from the groove adjacent thereto and the passage of fluid therebetween is substantially prevented.

The main grooves 10 can therefore be separated from each other and independent, not being provided with any intersection with respect to each other.

The configuration and the arrangement of the main grooves 10 is such that any radial plane comprising the axis Y of the tyre intersects at the central region 5 with at least four main grooves 10.

Preferably, said number of main grooves which are intersected by said any radial plane is between 4 and 6.

In particular, the initial end 12 of each main groove is placed in substantial axial alignment with the transition of another main groove 10 from the central region 5 towards the first or second shoulder region 6 or 7 so that the number of main grooves 10 which are intersected by a general radial plane remains substantially constant over a large portion of the circumferential extension of the tread band 2.

In the preferred embodiment described and illustrated here, the number of main grooves 10 which are intersected by a general radial plane is equal to four or five.

Figure 2 illustrates, merely by way of example, two different radial planes R and S which intersect with the main grooves 10 inside the central region 5 at R1, R2, R3, R4, R5 and at S1, S2, S3 and S4, respectively. In particular, the radial plane S intersects with the tread band 2 at the transition of a main groove 10 between the central region 5 and the shoulder region 7 and at an initial end 12 of another main groove 10, in order to identify the axial alignment thereof.

Preferably, the width of each main groove 10 progressively increases from the initial end 12 as far as the opposite terminal end 14 which is located in the region of the lateral edge 8 or 9 of the tread band 2.

Preferably, the width of the main groove 10 at the initial end 12 is greater than or equal to 2 mm.

Preferably, the width of the main groove 10 at the initial end 12 is less than or equal to 3.5 mm.

Preferably, at the end of the first length 11 said width of the main groove 10 is greater than or equal to 5 mm. Preferably, at the end of the first length 11 said width of the main groove 10 is less than or equal to 8 mm.

Preferably, the width of the main groove 10, at the terminal end 14, is greater than or equal to 7 mm. Preferably, the width of the main groove 10, at the terminal end 14, is less than or equal to 11 mm.

The widths of the single main grooves 10 may vary with respect to each other in accordance with the specific pitch of the tyre with which they are associated and, therefore, they are always formed so as to preferably maintain the ratio between the width measured at the lateral edge 8 or 9 (corresponding to the terminal end 14) and the width measured at the initial end 12 between 3 and 4.5.

The tread band 2 further comprises a first and a second plurality of secondary grooves which are designated 20 and 21, respectively, and which are arranged in succession along the circumferential extension of the tread band 2.

Each secondary groove 20, 21 extends in a substantially circumferential direction between consecutive pairs of main grooves 10 with an inclination with respect to the equatorial plane X greater than 0°. Preferably, each secondary groove 20, 21 extends between consecutive pairs of main grooves 10 with an inclination with respect to the equatorial plane X less than 40°.

Preferably, the secondary grooves all have the same inclination, for example, about 3°.

The first plurality of secondary grooves 20 are arranged between the central region 5 and the first shoulder region 6 at a distance from the equatorial plane X of about 30% of the effective width L, while the second plurality of secondary grooves 21 are arranged, symmetrically with respect to the first plurality of secondary grooves 20, between the central region 5 and the second shoulder region 7 at a distance of about 30% of the effective width L.

Preferably, the secondary grooves 20, 21 are open at the respective main grooves 10 substantially in the region of the connection between the first length 11 and the second length 13.

Each secondary groove 20 of the first plurality, as for each secondary groove 21 of the secondary plurality, has both ends 22 at least partially facing in a circumferential direction an end of another secondary groove which is open at the same main groove 10.

The secondary grooves 20 and 21 preferably have a substantially constant width.

Each secondary groove 20, 21 delimits, at one side, a shoulder block 15 and, at the other side, a central block 16.

At the central region 5, there further extends, between pairs of main grooves 10, a connection groove 25 which subdivides the central block 16 into two portions having similar dimensions.

The connection grooves 25 extend between adjacent pairs of main grooves 10 in a symmetrical manner with respect to the equatorial plane X. Preferably, said connection grooves 25 have a substantially constant width.

Preferably, all the main grooves 10, the secondary grooves 20, 21 and the connection grooves 25 have a depth greater than about 8 mm.

Preferably, all the main grooves 10, the secondary grooves 20, 21 and the connection grooves 25 have a depth less than about 10 mm.

Preferably, there corresponds to each central block 16 a single shoulder block 15 which is therefore delimited by the respective second lengths 13 of a pair of main grooves 10 and by a secondary groove 20, 21 without being affected by any additional groove which subdivides it into smaller portions.

There are preferably formed on each of the blocks 15 and 16 which are defined on the tread band 2 a plurality of sipes 23 which are suitable for promoting the grip of the tyre 1 on a snow-covered surface.

The sipes 23 may be of any suitable form, straight or undulating, and may extend in any desired direction, axial or oblique.

In the preferred example described and illustrated here, there are formed on the central blocks 16 straight sipes 23a while there are formed on the shoulder blocks 15 zigzag sipes 23b.

The sipes 23a have substantially the same inclination with respect to the equatorial plane X in a mutually substantially symmetrical manner with respect to the equatorial plane itself.

Preferably, the sipes 23b which are present on each shoulder block 15 are substantially counter-inclined (with reference to the mean inclination thereof) with respect to the sipes 23a which are present in the corresponding adjacent central block 16.

Furthermore, the sipes 23 preferably have a variable depth over the individual longitudinal extension thereof. In particular, the sipe has a first depth at a central portion thereof while it has a second depth which is less than the first depth at the terminal portions thereof.

Preferably, the sipes 23 may further have a third depth, intermediate between the first depth and second depth, at one of the two terminal portions of the sipe.

In this manner, the blocks 15 and 16 maintain a high general rigidity which promotes the performance levels of the tyre particularly on dry and wet road surfaces, further affording relevant advantages in terms of less wear of the tyre itself.

In the embodiment shown in Figure 2, the central region 5 has a void-to-rubber ratio of about 0.32, the shoulder region 6 or 7 has a void-to-rubber ratio of about 0.35 and, generally, the tread band 2 has a void-to-rubber ratio, inside the effective width L thereof, of about 0.33. In greater detail, subdividing the central region 5 into a first zone 5a, which extends symmetrically across the equatorial plane X over a width equal to about 30% of the effective width L of the tread band, and in a second zone 5b formed by the two portions of the central region 5 interposed between the first zone 5a and the shoulder regions 6 or 7, the first zone 5a has a void-to-rubber ratio of about 0.29 and the second zone 5b has a void-to-rubber ratio of about 0.36.

More generally, the value of the void-to-rubber ratio in the first zone 5a of the central region is preferably less than the value in relation to the second zone 5b. Preferably, the value of said ratio in the shoulder regions 6 or 7 is maintained substantially constant or decreases with respect to the ratio in relation to the second zone 5b. The above-described tread pattern produces a regular and substantially uniform distribution of the rigidity over the axial extension of the tread band. In particular, each shoulder region 6 or 7 contributes about 42% of the total rigidity of the tread band, while the remaining 58% is generally supplied by the central region 5. In greater detail inside the central region 5: the first zone 5a makes a contribution to the total rigidity of the tread band equal to 26% while the second zone 5b makes a contribution to the total rigidity of the tread band equal to 32%.

### EXAMPLE

There have been compared tyres having a size of 195/65 R15 model Winter SnowControl™ Series 3, which are currently marketed by the Applicant (comparison) and appreciated by clients, with tyres of the same size and having a tread pattern which is produced as shown in the Figures of the present document (invention).

The Applicant has carried out a series of tests on different road surfaces, in particular on a wet, snow-covered and dry road surface.

The results of the tests are set out in Table 1 below, in which the values of the evaluations are expressed as percentages by fixing the values in relation to the comparison tyre equal to 100.

**Table 1**

| | Comparison | Invention |
|---|---|---|
| Lateral Aquaplane | 100 | 108 |
| Aquaplane on straight | 100 | 109 |
| Subjective noise | 100 | 105 |
| Braking on dry | 100 | 103 |
| Braking on wet | 100 | 104 |
| Handling on dry | 100 | 105 |
| Handling on wet | 100 | 100 |
| Braking on snow | 100 | 104 |
| Traction on snow | 100 | 108 |

The tyre 1 of the invention has therefore exhibited a net overall improvement with respect to the tyre with which it was compared.

## Claims

1. A tyre for vehicle wheels comprising a tread band (2) having a tread pattern in which there are defined:
- a central region (5) of said tread band extending circumferentially across an equatorial plane (X) of said tyre over a width equal to about 60% of an effective width (L) of said tread band;
- a first and a second shoulder region (6, 7) which extend at the opposing sides of said central region in an axially external position of said tread band, respectively, wherein said tread band comprises:
- a plurality of main grooves (10) which are arranged in succession over the circumferential extension of said tread band and do not intersect with each other, each of said main grooves extending from said central region (5), through said first or alternatively said second shoulder region (6, 7), in order to open at a lateral edge (8, 9) of said tread band;
- at least one plurality of secondary grooves (20, 21) which are arranged in succession over the circumferential extension of said tread band, said secondary grooves extending in a substantially circumferential direction between consecutive pairs of said main grooves (10); and
wherein any radial plane (R, S) comprising the axis (Y) of said tyre intersects at said central region (5) with at least four of said main grooves (10), and
**characterised in that**, with reference to the entire circumferential extension of said tread band (2), the central region (5) surface-area in which said number of main grooves (10) which are intersected by said any radial plane (R, S) is greater than five is a portion less than 15% of the total surface-area of said central region.

2. A tyre according to claim 1, wherein said number of main grooves (10) which are intersected by said any radial plane (R, S) is between four and six.

3. A tyre according to any one of the preceding claims, wherein an initial end (12) of each of said main grooves (10), which end is defined in said central region (5), is in substantial axial alignment with the transition of another main groove from said central region (5) towards said first or second shoulder region (6, 7).

4. A tyre according to any one of the preceding claims, wherein the width of said main grooves (10) increases from an initial end (12), which is defined in said central region (5), towards said lateral edge (8, 9) of the tread band and wherein the ratio between the width of said main grooves (10) at said lateral edge (8, 9) of the tread band and said initial end (12) is between 3 and 4.5.

5. A tyre according to any one of the preceding claims, wherein said tread band (2) comprises a first plurality of secondary grooves (20) which extend in a region defined across said central region (5) and said first shoulder region (6) at a distance from said equatorial plane (X) between about 25% and about 35% of said effective width (L) of the tread band.

6. A tyre according to claim 5, wherein said tread band (2) comprises a second plurality of secondary grooves (21) which extend in a region which is defined across said central region (5) and said second shoulder region (21) at a distance from said equatorial plane (X) between about 25% and about 35% of said effective width (L) of the tread band.

7. A tyre according to claim 5 or claim 6, wherein said first plurality of secondary grooves (20) or said second plurality of secondary grooves (21) extend at a distance from said equatorial plane (X) equal to about 30% of said effective width of the tread band.

8. A tyre according to any one of the preceding claims, wherein each of said secondary grooves has an inclination with respect to the equatorial plane (X) between 0° and 10°.

9. A tyre according to any one of the preceding claims, wherein each secondary groove (20, 21) has both ends at least partially facing, in a circumferential direction, an end of another secondary groove (20, 21).

10. A tyre according to any one of the preceding claims, wherein, at said central region (5), a connection groove (25) extends between consecutive pairs of main grooves (10).

11. A tyre according to claim 10, wherein each connection groove (25) has an inclination with respect to the equatorial plane (X) between 10° and 30°.

12. A tyre according to any one of the preceding claims, wherein said secondary grooves (20, 21) have a width between 2 mm and 5 mm.

13. A tyre according to any one of the preceding claims, wherein said tread band, inside the effective width (L) thereof, has a void-to-rubber ratio between 0.30 and 0.36.

14. A tyre according to any one of the preceding claims, wherein the void-to-rubber ratio of the central region (5) is between 0.28 and 0.36.

15. A tyre according to any one of the preceding claims, wherein the void-to-rubber ratio of the shoulder region (6, 7) is between 0.31 and 0.38.

## Patentansprüche

1. Reifen für Fahrzeugräder, umfassend einen Laufflächenring (2) mit einem Laufflächenmuster, in welchem Folgendes definiert ist:
- ein Zentralbereich (5) des Laufflächenrings, der sich in Umfangsrichtung über eine Äquatorialebene (X) des Reifens über eine Breite gleich etwa 60 % einer effektiven Breite (L) des Laufflächenrings erstreckt;
- einen ersten und einen zweiten Schulterbereich (6, 7), die sich jeweils an den gegenüberliegenden Seiten des Zentralbereichs in einer Position axial außerhalb des Laufflächenrings erstrecken, wobei der Laufflächenring umfasst:
- eine Vielzahl von Hauptnuten (10), die aufeinanderfolgend über die Umfangserstreckung des Laufflächenrings angeordnet sind und einander nicht schneiden, wobei jede der Hauptnuten sich von dem Zentralbereich (5) durch den ersten oder alternativ den zweiten Schulterbereich (6, 7) erstreckt, um sich an einem Seitenrand (8, 9) des Laufflächenrings zu öffnen;
- zumindest eine Vielzahl von Sekundärnuten (20, 21), die aufeinanderfolgend über die Umfangserstreckung des Laufflächenrings angeordnet sind, wobei die Sekundärnuten sich im Wesentlichen in einer Umfangsrichtung zwischen aufeinanderfolgenden Paaren von Hauptnuten (10) erstrecken; und
wobei eine beliebige radiale Ebene (R, S), welche die Achse (Y) des Reifens umfasst, sich an dem Zentralbereich (5) mit zumindest vier der Hauptnuten (10) schneidet, und
**dadurch gekennzeichnet, dass** in Bezug auf die gesamte Umfangserstreckung des Laufflächenrings (2) der Oberflächenbereich des Zentralbereichs (5), in welchem die Anzahl der Hauptnuten (10), die von der beliebigen radialen Ebene (R, S) geschnitten werden, größer als fünf ist, einen Anteil von weniger als 15 % des gesamten Oberflächenbereichs des Zentralbereichs bildet.

2. Reifen nach Anspruch 1, wobei die Anzahl von Hauptnuten (10), die durch die beliebige radiale Ebene (R, S) geschnitten werden, zwischen vier und sechs ist.

3. Reifen nach einem der vorhergehenden Ansprüche, wobei ein Anfangsende (12) einer jeden der Hauptnuten (10), welches in dem Zentralbereich (5) definiert ist, im Wesentlichen in axialer Ausrichtung mit dem Übergang einer weiteren Hauptnut von dem Zentralbereich (5) zu dem ersten oder zweiten Schulterbereich (6, 7) steht.

4. Reifen nach einem der vorhergehenden Ansprüche, wobei die Breite der Hauptnuten (10) von einem Anfangsende (12), das in dem Zentralbereich (5) definiert ist, zu dem Seitenrand (8, 9) des Laufflächenrings hin zunimmt, und wobei das Verhältnis zwischen der Breite der Hauptnuten (10) an dem Seitenrand (8, 9) des Laufflächenrings und dem Anfangsende (12) zwischen 3 und 4,5 beträgt.

5. Reifen nach einem der vorhergehenden Ansprüche, wobei der Laufflächenring (2) eine erste Vielzahl von Sekundärnuten (20) umfasst, die sich in einem Bereich erstrecken, der über den Zentralbereich (5) und den ersten Schulterbereich (6) definiert ist, in einem Abstand von der Äquatorialebene (X) zwischen etwa 25 % und etwa 35 % der effektiven Breite (L) des Laufflächenrings.

6. Reifen nach Anspruch 5, wobei der Laufflächenring (2) eine zweite Vielzahl von Sekundärnuten (21) umfasst, die sich in einem Bereich erstrecken, der über den Zentralbereich (5) und den zweiten Schulterbereich (21) definiert ist, in einem Abstand von der Äquatorialebene (X) zwischen etwa 25 % und etwa 35 % der effektiven Breite (L) des Laufflächenrings.

7. Reifen nach Anspruch 5 oder Anspruch 6, wobei die erste Vielzahl von Sekundärnuten (20) oder die zweite Vielzahl von Sekundärnuten (21) sich in einem Abstand von der Äquatorialebene (X) gleich etwa 30 % der effektiven Breite des Laufflächenrings erstrecken.

8. Reifen nach einem der vorhergehenden Ansprüche, wobei jede der Sekundärnuten eine Schräge in Bezug auf die Äquatorialebene (X) zwischen 0° und 10° aufweist.

9. Reifen nach einem der vorhergehenden Ansprüche, wobei beide Enden jeder Sekundärnut (20, 21) in einer Umfangsrichtung zumindest zum Teil jeweils zu einem Ende einer weiteren Sekundärnut (20, 21) weisen.

10. Reifen nach einem der vorhergehenden Ansprüche, wobei sich an dem Zentralbereich (5) eine Verbindungsnut (25) zwischen aufeinanderfolgenden Paaren von Hauptnuten (10) erstreckt.

11. Reifen nach Anspruch 10, wobei jede Verbindungsnut (25) eine Schräge in Bezug auf die Äquatorialebene (X) zwischen 10° und 30° aufweist.

12. Reifen nach einem der vorhergehenden Ansprüche, wobei die Sekundärnuten (20, 21) eine Breite zwischen 2 mm und 5 mm aufweisen.

13. Reifen nach einem der vorhergehenden Ansprüche, wobei der Laufflächenring innerhalb seiner effektiven Breite (L) ein Gesamtverhältnis der negativen und positiven Profilanteile zwischen 0,30 und 0,36 aufweist.

14. Reifen nach einem der vorhergehenden Ansprüche, wobei das Gesamtverhältnis der negativen und positiven Profilanteile des Zentralbereichs (5) zwischen 0,28 und 0,36 beträgt.

15. Reifen nach einem der vorhergehenden Ansprüche, wobei das Gesamtverhältnis der negativen und positiven Profilanteile des Schulterbereichs (6, 7) zwischen 0,31 und 0,38 beträgt.

## Revendications

1. Pneu pour roues de véhicule comprenant une bande de roulement (2) ayant une sculpture de bande de roulement où sont définies :
- une région centrale (5) de ladite bande de roulement s'étendant de manière circonférentielle sur un plan équatorial (X) dudit pneu sur une largeur égale à environ 60% d'une largeur effective (L) de ladite bande de roulement ;
- des première et deuxième régions d'épaulement (6, 7) qui s'étendent sur les côtés opposés de ladite région centrale dans une position axialement externe de ladite bande de roulement, respectivement,
dans lequel ladite bande de roulement comprend :
- une pluralité de rainures principales (10) qui sont agencées successivement sur l'extension circonférentielle de ladite bande de roulement et qui ne se croisent pas, chacune desdites rainures principales s'étendant à partir de ladite région centrale (5), à travers ladite première ou bien ladite deuxième région d'épaulement (6, 7), afin de s'ouvrir au niveau d'un bord latéral (8, 9) de ladite bande de roulement ;
- au moins une pluralité de rainures secondaires (20, 21) qui sont agencées successivement sur l'extension circonférentielle de ladite bande de roulement, lesdites rainures secondaires s'étendant dans une direction essentiellement circonférentielle entre des paires consécutives desdites rainures principales (10) ; et
dans lequel tout plan radial (R, S) comprenant l'axe (Y) dudit pneu se croise au niveau de ladite région centrale (5) avec au moins quatre desdites rainures principales (10), et
**caractérisé en ce que**, en référence à toute l'extension circonférentielle de ladite bande de roulement (2), la superficie de la région centrale (5) dans laquelle ledit nombre de rainures principales (10) qui sont coupées par ledit plan radial (R, S) est supérieur à cinq est une partie inférieure à 15% de la superficie totale de ladite région centrale.

2. Pneu selon la revendication 1, dans lequel ledit nombre de rainures principales (10) qui sont coupées par ledit plan radial (R, S) est compris entre quatre et six.

3. Pneu selon l'une quelconque des revendications précédentes, dans lequel une extrémité initiale (12) de chacune desdites rainures principales (10), laquelle extrémité est définie dans ladite région centrale (5), est essentiellement alignée axialement avec le passage d'une autre rainure principale de ladite région centrale (5) vers ladite première ou deuxième région d'épaulement (6, 7).

4. Pneu selon l'une quelconque des revendications précédentes, dans lequel la largeur desdites rainures principales (10) augmente d'une extrémité initiale (12), qui est définie dans ladite région centrale (5), vers ledit bord latéral (8, 9) de la bande de roulement et dans lequel le rapport entre la largeur desdites rainures principales (10) au niveau dudit bord latéral (8, 9) de la bande de roulement et celle au niveau de ladite extrémité initiale (12) est compris entre 3 et 4,5.

5. Pneu selon l'une quelconque des revendications précédentes, dans lequel ladite bande de roulement (2) comprend une première pluralité de rainures secondaires (20) qui s'étendent dans une région définie à travers ladite région centrale (5) et ladite première région d'épaulement (6) à une distance dudit plan équatorial (X) entre environ 25% et environ 35% de ladite largeur effective (L) de la bande de roulement.

6. Pneu selon la revendication 5, dans lequel ladite bande de roulement (2) comprend une deuxième pluralité de rainures secondaires (21) qui s'étendent dans une région qui est définie à travers ladite région centrale (5) et ladite deuxième région d'épaulement (21) à une distance dudit plan équatorial (X) entre environ 25% et environ 35% de ladite largeur effective (L) de la bande de roulement.

7. Pneu selon la revendication 5 ou 6, dans lequel ladite première pluralité de rainures secondaires (20) ou ladite deuxième pluralité de rainures secondaires (21) s'étendent à une distance dudit plan équatorial (X) égale à environ 30% de ladite largeur effective de la bande de roulement.

8. Pneu selon l'une quelconque des revendications précédentes, dans lequel chacune desdites rainures secondaires a une inclinaison par rapport au plan équatorial (X) entre 0° et 10°.

9. Pneu selon l'une quelconque des revendications précédentes, dans lequel chaque rainure secondaire (20, 21) a les deux extrémités faisant face au moins partiellement, dans une direction circonférentielle, à une extrémité d'une autre rainure secondaire (20, 21).

10. Pneu selon l'une quelconque des revendications précédentes, dans lequel, au niveau de ladite région centrale (5), une rainure de liaison (25) s'étend entre des paires consécutives de rainures principales (10).

11. Pneu selon la revendication 10, dans lequel chaque rainure de liaison (25) a une inclinaison par rapport au plan équatorial (X) entre 10° et 30°.

12. Pneu selon l'une quelconque des revendications précédentes, dans lequel lesdites rainures secondaires (20, 21) ont une largeur comprise entre 2 mm et 5 mm.

13. Pneu selon l'une quelconque des revendications précédentes, dans lequel ladite bande de roulement, dans sa largeur effective (L), a un rapport vide-caoutchouc compris entre 0,30 et 0,36.

14. Pneu selon l'une quelconque des revendications précédentes, dans lequel le rapport vide-caoutchouc de la région centrale (5) est compris entre 0,28 et 0,36.

15. Pneu selon l'une quelconque des revendications précédentes, dans lequel le rapport vide-caoutchouc de la région d'épaulement (6, 7) est compris entre 0,31 et 0,38.
